# FASCICULE DE BREVET EUROPEEN

(11) **EP 1 646 304 B1**
(45) Date de publication et mention de la délivrance du brevet: **11.07.2007**
(21) Numéro de dépôt: 04736556.4
(22) Date de dépôt: 10.06.2004
(51) Int. Cl.: A47J 31/40, A47J 31/06

(54) **PROCEDE DE PREPARATION D'UNE BOISSON A PARTIR D'UNE CAPSULE ET DISPOSITIF POUR LA MISE EN OEUVRE DU PROCEDE**
VERFAHREN ZUR HERSTELLUNG EINES GETRÄNKES AUS EINER KAPSEL UND GERÄT FÜR SOLCHES VERFAHREN
METHOD FOR PREPARING A BEVERAGE FROM A CAPSULE AND DEVICE THEREFOR

(30) Priorité: 23.07.2003 EP 03016753
(43) Date de publication de la demande: 19.04.2006
(73) Titulaire: Monodor S.A., 1041 St. Barthélemy (CH)
(72) Inventeur: FAVRE, Eric, CH-1041 St. Barthélémy (CH); HENTSCH, Jacques, CH-1020 Renens (CH)
(74) Mandataire: Reuteler, Raymond Werner
(86) Numéro de dépôt international: PCT/IB2004/002016
(87) Numéro de publication internationale: WO 2005/006927

(56) Documents cités:
- EP-A- 0 521 187
- EP-A- 0 521 188
- EP-A- 0 870 457
- WO-A-00/56629
- WO-A-95/25457
- US-A- 5 794 519
- US-A1- 2002 023 543

## Description

La présente invention concerne un procédé pour la préparation d'une boisson ou d'un aliment liquide à partir d'une capsule ou capsule contenant une substance à extraire, et un dispositif pour la mise en oeuvre du procédé.

Il est connu de préparer une boisson à partir d'une capsule contenant un produit à extraire, par exemple le café, tel que décrit dans la demande de brevet internationale WO 92 07775. La capsule est logée dans un porte-capsule ou corps de dispositif pouvant être serré hermétiquement contre une tête d'injection agencée de manière à injecter de l'eau chaude dans la capsule. Le fond du porte-capsule ou corps est muni de moyens de perforation du fond de la capsule pour l'écoulement du café ou autre boisson à extraire de la capsule.

Dans les dispositifs connus, il existe différents systèmes d'injection d'eau dans la capsule. Certains systèmes comprennent une grille munie de multiples orifices pour répartir l'eau d'injection sur une membrane poreuse supérieure de la capsule, tels que décrits dans la demande européenne EP 0 006 175. Les têtes d'injection peuvent aussi être munies de multiples pointes, telles que décrites dans le brevet US 3,607,297 perforant une membrane hermétique de la capsule. Dans certains systèmes, la tête d'injection comporte une ou plusieurs pointes s'injection, chacune munie d'un canal d'injection d'eau, qui percent la membrane supérieure de la capsule afin d'injecter l'eau directement dans la capsule les canaux d'injection se trouvant sur les pointes d'injection. Les têtes d'injection munies de moyens de perforation ont l'avantage de pouvoir fournir les capsules ou capsules avec une membrane supérieure hermétique qui ne doit pas être enlevée avant l'utilisation.

Les systèmes d'injection à pointe unique, où l'orifice d'injection d'eau est disposé à l'intérieur de la capsule, ont le désavantage de ne pas distribuer l'eau injectée de manière uniforme à travers le produit contenu dans la capsule conduisant à la création de canaux d'écoulement préférentiels à travers la substance à extraire. Il en résulte une extraction du produit à extraire qui n'est pas complète et une forte diminution de la pression d'extraction à l'intérieur de la capsule pendant le procédé, vu la faible résistance des canaux préférentiels d'écoulement.

Dans des systèmes avec tête d'injection à multiples pointes de perforation, tels que décrits dans. US 3,327,614, EP 604 615, ou EP 1 203 554, le problème de formation de canaux préférentiels par rapport à une pointe d'injection unique est amoindri, mais néanmoins pas éliminé.

EP 0 521 187 décrit une système avec une tête d'injection comportant une grille de répartition d'eau, munie sur sa face inférieure des éléments saillants afin de permettre la déchirure de la paroi supérieure d'une capsule.

Dans tous les systèmes connus, lors de l'extraction, la résistance à l'écoulement d'eau injectée à travers le produit contenu dans la capsule a tendance à diminuer, notamment dans la dernière phase de l'extraction.

Au vu des inconvénients précités, un but de l'invention est de réaliser un procédé de préparation d'une boisson ou d'un aliment liquide à partir d'une capsule contenant un produit avec une substance à extraire, qui est efficace et qui permet d'optimiser l'extraction de la substance.

Un autre but de l'invention est de réaliser un dispositif et une capsule contenant un produit avec une substance à extraire pour la préparation d'une boisson ou d'un aliment liquide, qui permettent d'optimiser l'extraction de la substance.

Il est avantageux de réaliser un procédé de préparation d'une boisson ou d'un aliment liquide et un dispositif et capsule pour la mise en oeuvre du procédé qui améliorent la saveur et la texture de la boisson ou de l'aliment liquide obtenu.

II est avantageux de réaliser un procédé et un dispositif et une capsule pour la mise en oeuvre du procédé, notamment pour la préparation de café ou de chocolat chaud, qui permettent de créer une mousse épaisse.

Des buts de l'invention sont réalisés par un procédé de préparation d'une boisson ou d'un aliment liquide selon la revendication 1, par un dispositif pour la préparation d'une boisson ou d'un aliment liquide selon la revendication 8.

Avantageusement, le procédé, le dispositif et la capsule selon l'invention permettent d'assurer une bonne distribution d'eau d'injection dans la capsule et le maintien d'une contre-pression à l'intérieur de la capsule, afin d'optimiser l'extraction du produit à extraire à l'intérieur de la capsule.

De surcroît, le procédé, le dispositif et la capsule selon l'invention permettent d'éviter la formation de canaux d'écoulement préférentiels. Dans le cas de produits laissant du marc dans la capsule, tels que du café, la pression exercée par la membrane supérieure de la capsule contre le produit à extraire permet, d'une part, d'éviter la formation de canaux d'écoulement préférentiels et d'autre part, de maintenir une contre-pression à la pression d'injection de manière à assurer que l'extraction pendant tout le cycle d'extraction se fait à une pression élevée, ce qui optimise l'extraction et permet d'obtenir des saveurs plus riches et une extraction plus complète du produit entier contenu dans la capsule.
D'autre part, la pression élevée pendant tout le cycle d'extraction permet d'obtenir de très bonnes mousses.

La récupération de la mousse peut encore être améliorée en disposant, au fond du porte-capsule, une partie de collecteur avec une paroi définissant un orifice surélevé et muni de fentes d'écoulement partielles pour le vidage du liquide écoulé, une partie de la mousse passant par l'orifice surélevé de la partie de collecteur.

Pour des produits ne laissant pas de marc, c'est-à-dire qui sont complètement extraits tels que le chocolat ou le lait en poudre, le procédé, le dispositif et la capsule selon l'invention permettent une extraction complète avec la formation d'une bonne mousse.

D'autres buts et caractéristiques avantageuses ressortiront des revendications, de la description et des dessins annexés, dans lesquels:
la Fig. 1 est une vue en coupe d'une partie d'un dispositif de préparation d'une boisson ou d'un aliment liquide, montrant une partie d'une tête d'injection et d'un porte-capsule dans lequel est logée une capsule remplie d'un produit ayant une substance à extraire, la tête d'injection et le porte-capsule étant dans une position initiale avant extraction;
la Fig. 2 est une vue similaire à la Fig. 1, mais avec la tête d'injection dans sa position "prêt pour injection", c'est-à-dire serrée hermétiquement contre la face supérieure de la capsule dans le porte-capsule;
la Fig. 2a est une vue partielle, détaillée, illustrant une perforation, par une pointe de perforation de la tête d'injection, dans une membrane souple de la capsule;
la Fig. 3 est une vue similaire à la Fig. 2, dans une première phase d'injection d'eau;
la Fig. 4 est une vue similaire à la Fig. 3, dans une phase plus avancée d'injection d'eau;

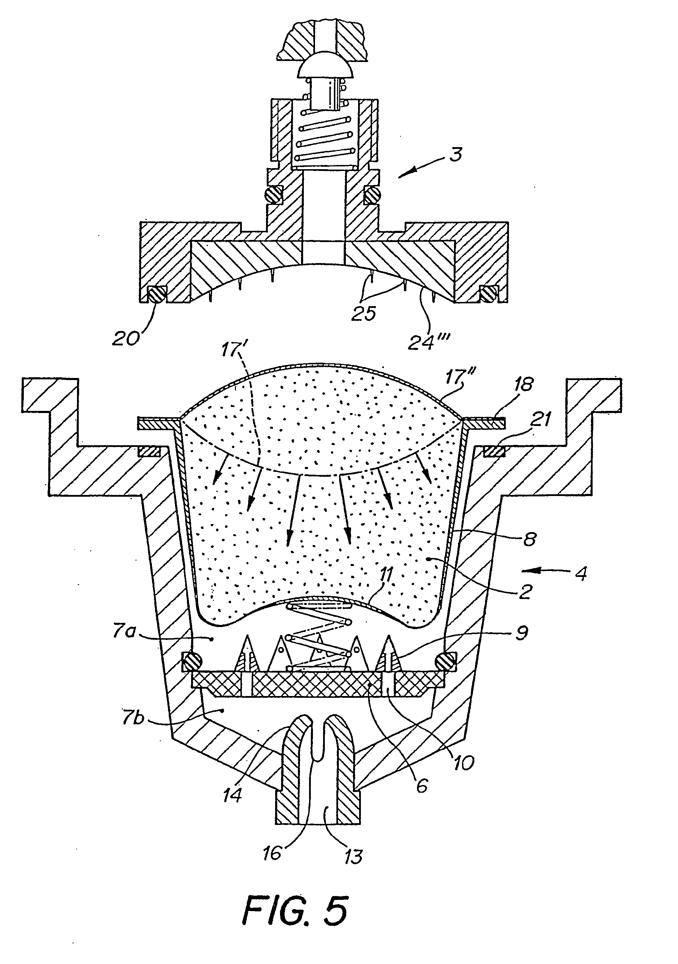

la Fig. 5 est une vue en coupe d'une alternative tête d'injection et capsule; et
la Fig. 6 est une vue en coupe d'une autre variante de la tête d'injection et de la capsule selon l'invention.

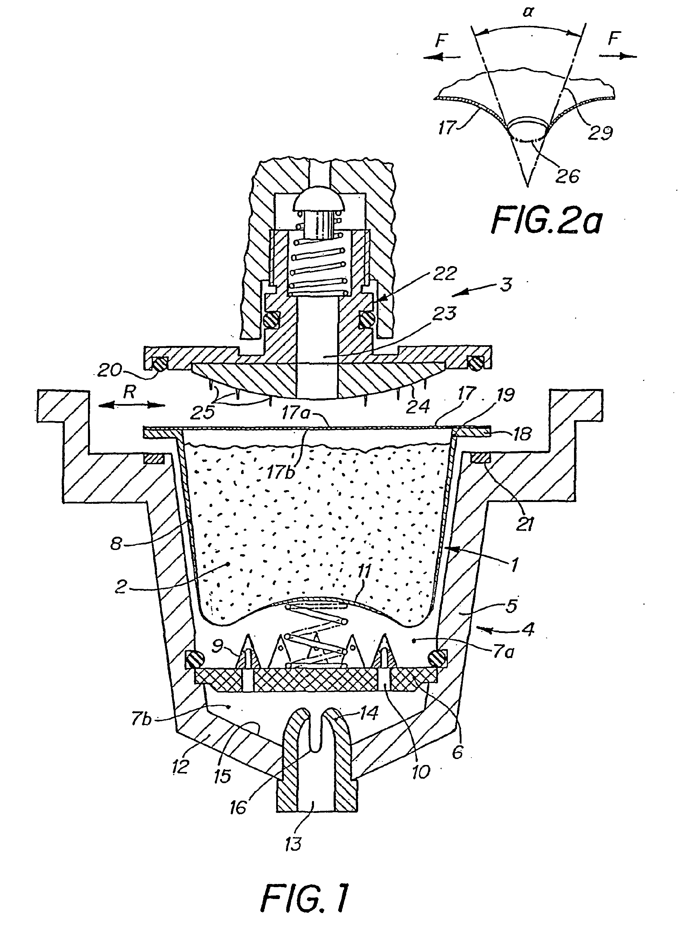

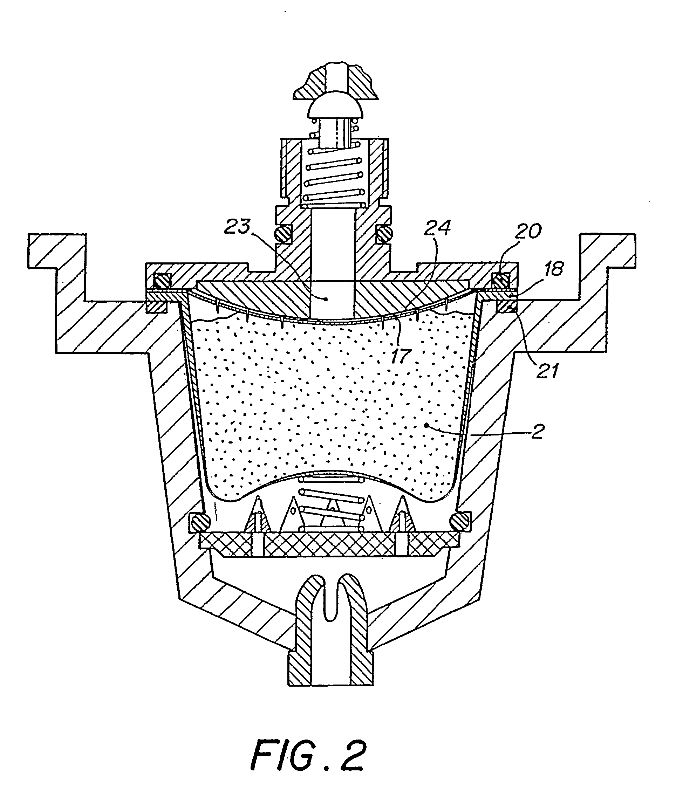

En faisant référence aux figures, un dispositif pour la préparation d'une boisson ou d'un aliment liquide à partir d'une capsule 1 contenant un produit 2 ayant une substance à extraire, comprend une tête d'injection 3 et un porte-capsule 4 qui peut être serré contré la tête d'injection, tel que montré dans les figures 2 à 4, par un système à baïonnette ou un autre système. Le porte-capsule 4 comporte une paroi latérale 5 et une paroi de fond intermédiaire 6 formant une partie de cavité supérieure 7a dans laquelle est logée la capsule 1. La paroi latérale 5 a une forme légèrement conique épousant la forme également essentiellement conique d'une paroi latérale 8 de la capsule. La paroi de fond intermédiaire 6 peut avantageusement être sous forme d'une paroi filtrante munie d'une pluralité dé pointes de perforation 9 et d'orifices d'écoulement 10 traversant cette paroi, les pointes étant agencées pour perforer la paroi de fond 11 de la capsule.

La paroi de fond 11 de la capsule peut avantageusement avoir une forme concave (vue de l'extérieur) qui flambe lorsqu'une certaine pression est atteinte dans la capsule lors de l'injection, de façon à ce que la paroi de fond 11 soit percée par les pointes de perforation 9, laissant ainsi s'écouler la boisson d'extraction par les orifices d'écoulement 10 de la paroi filtrante 6. Le liquide s'écoule dans une partie de cavité inférieure 7b du porte-capsule formé e entre la paroi de fond intermédiaire 6 et une paroi de fond 12.

La paroi de fond 12 du porte-capsule 4 a un canal d'écoulement 13 entouré d'une lèvre 14 surélevée par rapport au point bas 15 de la paroi de fond 12, la lèvre 14 comprenant une ou plusieurs fentes 16 s'étendant vers le point bas 15 de la partie de cavité inférieure 7b pour permettre au liquide de se vider entièrement du porte-capsule. La lèvre surélevée 14 permet d'assurer qu'une partie de la mousse 27 flottant sur la surface du liquide 28 dans la partie de la cavité inférieure entre dans le canal d'évacuation 13 et est vidée en même temps que le liquide non-mousseux par l'orifice surélevé. Ce système permet de préserver une plus grande quantité de la mousse qu'un système classique où le canal d'évacuation a un orifice simple au niveau du point le plus bas.

La capsule 1 a une membrane souple 17 soudée ou collée à un rebord annulaire 18 s'étendant radialement d'une extrémité 19 de la paroi latérale 8 de la capsule 1. Le rebord 18 ainsi que la partie soudée de la membrane souple 17 sont pris en sandwich entre un joint annulaire 20 disposé sur la tête d'injection, et le rebord supérieur 21 du porte-capsule 4. La paroi latérale 8 et la paroi de fond 11 de la capsule sont de préférence formées en une seule pièce d'un polymère injecté, tel que du polypropylène ou autre matière plastique recyclable. La paroi latérale 8 et la paroi de fond 11 forment une coque mince qui est relativement rigide par rapport à la membrane souple 17. La membrane souple 17 est de préférence également en un ou plusieurs polymères conçus pour pouvoir subir de grandes déformations élastiques et/ou permanentes. De préférence, la membrane souple est en un matériau proche ou identique à celui de la coque 8, 11, ce qui a l'avantage de faciliter le recyclage de la capsule.

La membrane souple 17 peut avantageusement être formée d'une feuille multicouche telle qu'une feuille en propylène multicouche afin d'améliorer sa résistance à la rupture et sa capacité de déformation (élastique et/ou permanente). Ceci est important au vu du fait que la membrane, soumise à une forte pression par l'eau d'injection lors de l'extraction, se déforme fortement. La membrane multicouche peut avantageusement être formée de plus de cinq couches. Il a été trouvé que sept couches permettent d'obtenir une caractéristique d'élasticité et de résistance à la rupture optimale pour certaines applications.

Lors de l'extraction, le rebord annulaire 18 agit comme support et résiste à la force de traction de la membrane, non seulement puisque le rebord est très rigide dans le sens radial R, mais également dû au fait que le rebord est pris en sandwich et serré entre le porte-capsule et le joint annulaire 20 de la tête d'injection.

La tête d'injection 3 comporte un corps 22 ayant un canal d'alimentation d'eau 23 débouchant sur une surface de perforation 24 munie d'une pluralité de pointes de perforation 25 espacées les une des autres et réparties sur la surface de perforation 24. Dans cette forme d'exécution, le canal d'alimentation d'eau débouche essentiellement au centre de la surface de perforation 24, mais il est possible d'avoir plusieurs canaux d'alimentation débouchant à différentes positions sur la surface de perforation. Le diamètre de la surface de perforation 24 est approximativement égal au, ou plus petit que le diamètre de la membrane souple 17 de la capsule.

Les pointes de perforation 25 ont de préférence une forme conique, c'est-à-dire avec une section essentiellement circulaire. Les pointes de perforation pourraient également avoir une section de forme elliptique ou une autre forme lisse, sans arrêtes tranchantes, mais ayant une forme évasée pour terminer dans une pointe de perforation. La ligne génératrice 29 de la forme des pointes de perforation est de préférence droite, mais elle pourrait également être courbe.

La surface non-tranchante des pointes de perforation permet avantageusement d'obtenir un trou perforé 26 dans la membrane élastique 17 dont le bord 26 (voir Fig. 2a) est lisse, régulier et sans angle vif pour éviter qu'elle se déchire lorsqu'une force de tension est appliquée dans la membrane.

L'angle du cône des pointes de perforation se situe de préférence entre 30 et 50°, l'angle du cône définissant le diamètre du trou perforé 26 en fonction de la profondeur d'insertion de la pointe dans la membrane 17. La profondeur d'insertion des pointes de perforation à travers la membrane 17 dépendra notamment de la résistance offerte par le produit 2 depuis l'intérieur de la capsule, lorsque la tête d'injection est dans sa position basse "prêt pour injection", tel que montré dans la Fig. 2.

Les propriétés de déformations élastique et permanente de la membrane 17 en combinaison avec la forme des pointes de perforation (la surface lisse et le cône d'un certain angle) permettent donc de former des trous 26 ayant des formes résistant à la déchirure et étant plus ou moins grands en fonction du taux de remplissage du produit à l'intérieur de la capsule et sa compacité. Il en résulte que, moins la capsule est remplie d'un produit 2, plus petits seront les trous de perforation dans la membrane. Dans la situation où le produit n'offre aucune contre-résistance lors de la perforation, le diamètre des trous 26 dépendra de la forme de la surface de perforation 24, des propriétés élastique et plastique de la membrane souple 17 et de la forme de pointes de perforation.

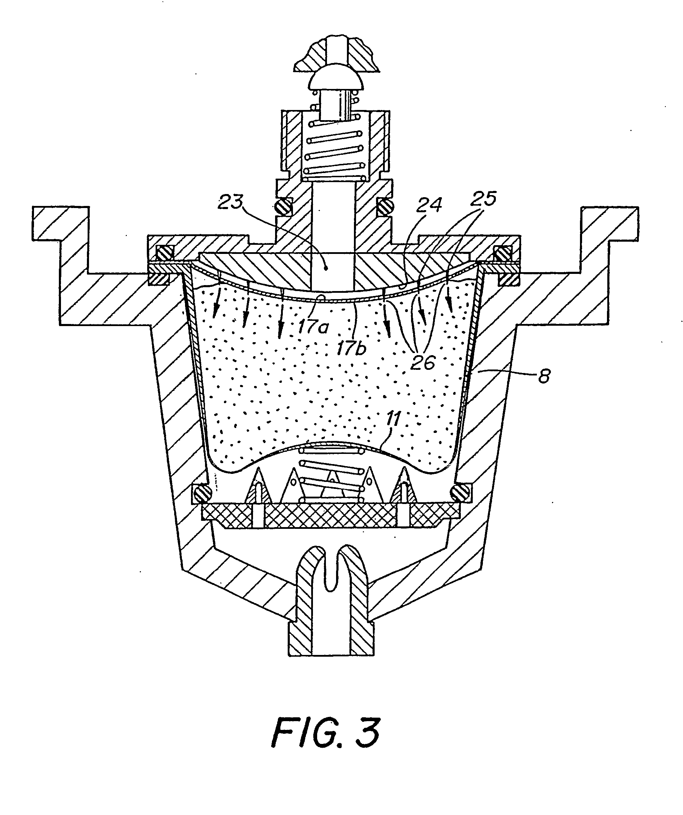

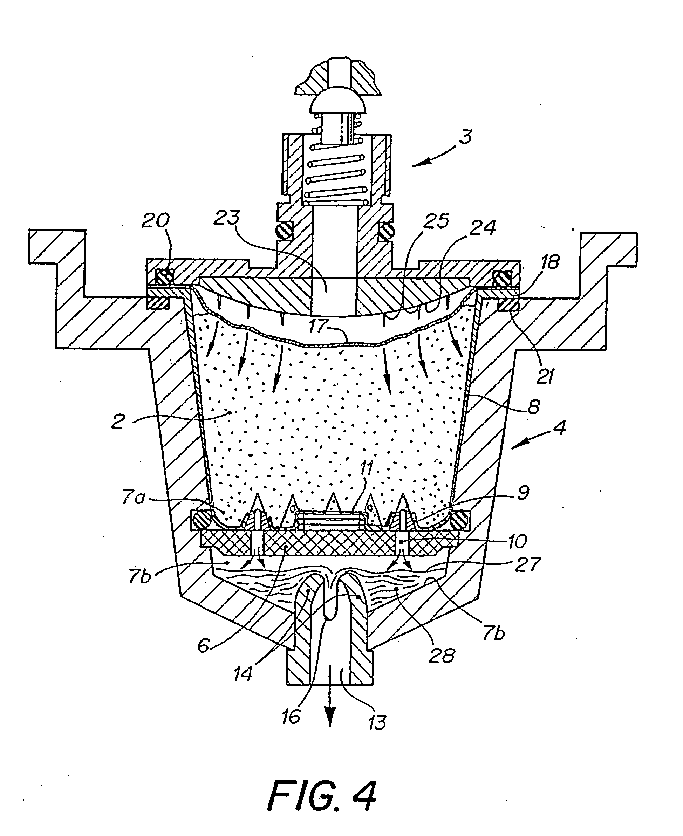

Lorsque l'eau est injectée sous pression par le canal d'alimentation 23, la membrane souple se déforme sous la pression, tel que montré dans la Fig. 3, et se distancie de la surface de perforation 24 de la tête d'injection. L'eau sous pression traverse la membrane souple par la pluralité de perforations 26 réparties sur la surface de la membrane et mouille le produit à l'intérieur de la capsule. L'augmentation de la pression dans la capsule fait flamber la paroi de fond bombé 11, qui est par conséquent projetée rapidement contre les pointes de perforation de la paroi-filtre 6 et perforée, permettant ainsi au liquide 28 de s'écouler dans la partie de cavité inférieure 7b, tel que montré dans la Fig. 4.

La pression exercée par la membrane souple sur le produit à l'intérieur de la capsule lors de l'extraction permet d'assurer que le produit reste relativement compact et évite la formation de canaux d'écoulement préférentiels. D'autre part, la pression exercée par la membrane permet également d'assurer que la contre-résistance à l'écoulement du liquide à travers le produit reste élevée tout au long du cycle d'extraction, améliorant ainsi le mouillage du produit, son extraction et la formation de mousse. L'importance de la déformation de la membrane souple 17 est déterminée par la différence de pression hydraulique ΔP entre sa surface 7a du côté de l'injection d'eau et sa surface 7b du côté de l'intérieur de la capsule. Le ΔP est influencé par la grandeur et le nombre des trous 26. La grandeur de ces trous 26 est fonction, entre autre, de la résistance qu'offre la membrane 17 lors de sa perforation par les pointes 25. Cette résistance dépendra notamment de la quantité de produit 2 contenu dans la capsule 8. Il y a, dans cette situation, autorégulation de la compression du produit 2 contenu dans la capsule 8. Moins il y a de produit dans la capsule plus forte sera la déformation de la membrane, et, moins important sera le débit d'eau, ce qui limite aussi les voies d'eau préférentielles.

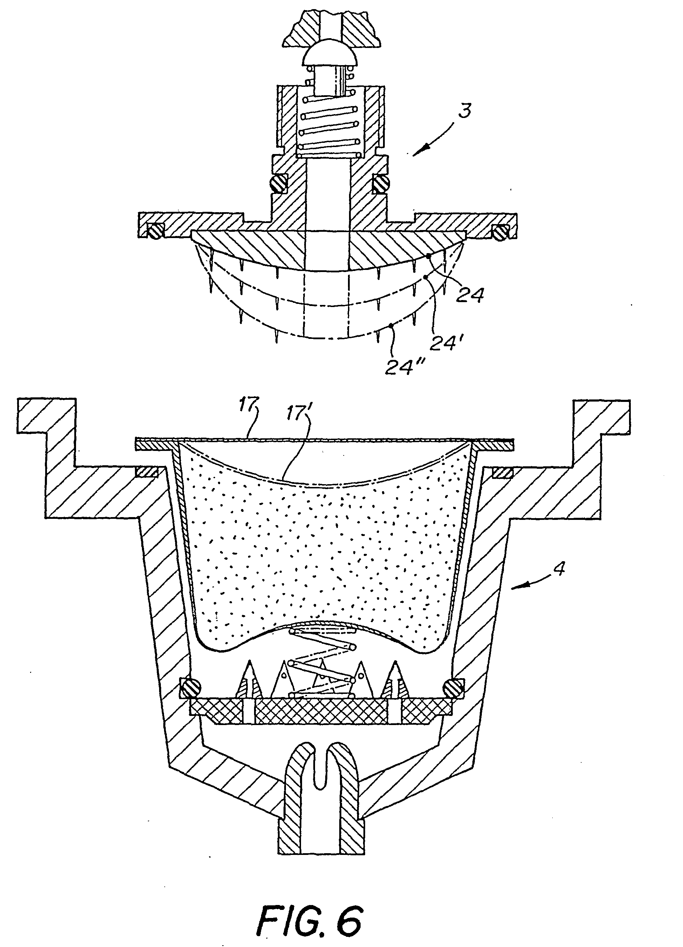

La formé de la surface de perforation 24 est convexe, telle que montrée dans la Fig. 6, pour engager une membrane souple 17 de la capsule qui est essentiellement plane. La courbure de la surface de perforation 24, 24', 24" peut être plus ou moins prononcée et, pour des surfaces de perforation 24" à fort rayon de courbure, la membrane souple pourrait même être concave (vue de l'extérieur), tel qu'indiqué par le numéro de référence 17'. Les têtes d'injection avec des surfaces de perforation 24" à fort rayon de courbure convexe peuvent être très utiles quand la capsule 1 est peu remplie avec du produit, comme cela peut être le cas pour du thé.

Aussi divulgué est une tête d'injection avec une surface de perforation ayant une forme concave (vu de l'extérieur) 24''' dans le cas où les capsules sont entièrement remplies et la membrane souple 17" a une forme convexe (vu de l'extérieur). Dans ce cas de figure, la membrane souple 17" peut même être semi-rigide et formée par thermoformage, vu qu'elle n'est pas soumise à une déformation en traction dans une première phase d'extraction, ou même pas du tout si le marc comprimé du produit restant dans la capsule à un volume plus grand que le volume formée par la coque de la capsule et la membrane en position "concave" (symétrique à la position "convexe").

## Revendications

1. Procédé de préparation d'une boisson ou d'un aliment liquide à partir d'une capsule contenant un produit avec une substance à extraire, la capsule ayant une coque (8, 11) formant un récipient rigide et une membrane souple (17) ayant une forte capacité de déformation élastique ou permanente enfermant un côté ouvert de la coque, comprenant les étapes de ;
- perforation d'une pluralité de trous lisses (26) répartis sur la membrane souple au moyen d'une tête d'injection (3) comprenant une surface de perforation (24) ayant une forme convexe vu de l'extérieur, et munie d'une pluralité de pointes de perforation (25) réparties sur la surface de perforation ayant une forme évasée et lisse sans arêtes tranchantes, cette surface de perforation appuyant la membrane souple contre le produit à l'intérieur de la capsule ou appliquant une force de traction dans la membrane ; et
- d'injection d'eau sur la membrane souple de manière à ce qu'elle se déforme vers le produit à l'intérieur de la capsule et que l'eau entre dans la capsule par les trous lisses sans qu'ils se déchirent.

2. Procédé selon la revendication 1 **caractérisé en ce que** l'on contrôle la taille des trous perforés par les pointes de perforation entre autre par le niveau de remplissage ou de la compacité du produit à l'intérieur de la capsule de sorte à influencer la différence de pression hydraulique ΔP entre les deux côtés de la membrane souple pour obtenir une autorégulation de la compression du produit contenu dans la capsule.

3. Procédé selon la revendication 1 ou 2, **caractérisé en ce que** la coque est formée par une paroi latérale (8) et une paroi de fond (11) et comprend un rebord annulaire (18), s'étendant essentiellement dans un plan radial R, auquel la membrane souple de la capsule est soudée ou collée; le dit rebord et la partie soudée de la membrane souple étant pris en sandwich entre un joint annulaire (29) disposé sur la tête d'injection et un rebord supérieur du porte-capsule.

4. Procédé selon l'une des revendications 1, 2 ou 3, **caractérisé en ce que** la coque et la membrane souple sont en polypropylène.

5. Procédé selon l'une des revendications précédentes, **caractérisé en ce que** la membrane souple est fabriquée à partir d'une feuille multicouche avec au moins cinq couches.

6. Procédé selon l'une des revendications précédentes, **caractérisé en ce que** la membrane souple a une forme essentiellement plane avant l'utilisation de la capsule.

7. Procédé selon l'une des revendications précédentes, **caractérisé en ce que** la paroi latérale (8) de la coque de la capsule a une forme essentiellement conique, le diamètre du cône se réduisant du rebord annulaire vers la paroi du fond.

8. Dispositif de préparation d'une boisson ou d'un aliment liquide à partir d'une capsule contenant un produit avec une substance à extraire, le dispositif comprenant une tête d'injection (3) comprenant une surface de perforation (24) munie d'une pluralité de pointes de perforation (25) réparties sur la surface de perforation et au moins un canal d'alimentation d'eau (23) débouchant sur la surface de perforation, les pointes de perforation ayant une forme évasée et lisse, sans arêtes tranchantes, les pointes ayant un angle moyen de cône inférieur à 60°, **caractérisé par** la surface de perforation (24) ayant une forme essentiellement courbe et convexe, vue de l'extérieur.

9. Dispositif selon la revendication 8, **caractérisé en ce que** les pointes de perforation ont un angle moyen de cône entre 30° et 50°.

10. Dispositif selon la revendication 8 ou 9, **caractérisé en ce que** les pointes de perforation ont essentiellement la forme de cône avec des lignes génératrices essentiellement droites.

11. Dispositif selon la revendication 8, 9 ou 10, **caractérisé en ce que** la canal d'alimentation d'eau débouche essentiellement au centre de la surface de perforation.

12. Dispositif selon l'une des revendications 8 à 11, convenant pour préparer un boisson ou aliment liquide à partir d'une capsule comprenant une coque essentiellement rigide formée par une paroi latérale (8) et un paroi de fond (11) formant un récipient dan lequel le produit est stocké, la coque comprenant en outre un rebord annulaire (18) s'étendant essentiellement dans un plan radial R, la capsule comprenant en outre une membrane souple (17) collée ou soudée au rebord annulaire (18), la membrane et la coque étant fabriquées d'un ou plusieurs polymères, la membrane souple (17) étant fabriquée à partir d'une feuille multicouche.

13. Dispositif selon la revendication précédente, **caractérisé en ce que** la coque et la membrane souple sont en polypropylène.

14. Dispositif selon l'une des deux revendications précédentes, **caractérisé en ce que** la membrane souple est fabriquée d'une feuille avec au moins cinq couches.

15. Dispositif selon l'une des revendications 12 à 14, **caractérisé en ce que** la membrane souple a une forme essentiellement plane avant l'utilisation de la capsule.

16. **Dispositif selon l'une des revendications 12 à 15, caractérisé en ce que** la paroi latérale (8) de la coque de la capsule a une forme essentiellement conique, le diamètre du cône se réduisant du rebord annulaire vers la paroi du fond.

## Claims

1. Process for the preparation of a beverage or a liquid foodstuff from a capsule containing a product with a substance to be extracted, the capsule having a shell (8, 11) forming a rigid receptacle and a flexible membrane (17) having a high elastic or permanent deformability, closing an open face of the shell, comprising the steps of;
- perforating a plurality of smooth holes (26) distributed across the flexible membrane by the means of an injection head (3) comprising a perforating surface (24) having a shape which is convex, as viewed from the exterior, and provided with a plurality of perforating spikes (25) distributed over the perforating surface and having a shape which is tapered and smooth without any sharp edges, this perforating surface pressing the flexible membrane against the product inside the capsule or applying a tensile force to the membrane; et
- injecting water on the flexible membrane such that the membrane deforms towards the product inside the capsule and the water enters into the capsule via the smooth holes without tearing of the same.

2. Process according to claim 1 **characterised in that** the size of the holes perforated by the perforating spikes is controlled by controlling the level of filling of the product inside the capsule or its compactness so as to influence the hydraulic pressure difference ΔP between the two surfaces of the flexible membrane to obtain an auto-regulation of the compression of the product contained in the capsule.

3. Process according to claim 1 or 2, **characterised in that** the shell is formed by a side wall (8) and a bottom wall (11) and comprises an annular flange section (18), extending in an substantially radial plane R, to which the flexible membrane of the capsule is welded or bonded, said flange section and the welded or bonded part of the flexible membrane being held between an annular seal (20) provided on the injection head and an upper flange section of the capsule carrier.

4. Process according to any one of claims 1, 2 or 3, **characterised in that** the shell and the flexible membrane are made of polypropylene.

5. Process according to any one of the preceding claims, **characterised in that** the flexible membrane is made from a multiple layer sheet having at least five layers.

6. Process according to any one of the preceding claims, **characterised in that** the flexible membrane has a substantially planar shape before use of the capsule.

7. Process according to any one of the preceding claims, **characterised in that** the side wall (8) of the shell of the capsule has a substantially conical shape.

8. Device for the preparation of a beverage or a liquid foodstuff from a capsule containing a product with a substance to be extracted, the device comprising an injection head (3) comprising a perforating surface (24) provided with a plurality of perforating spikes (25) distributed over the perforating surface and at least one water supply channel (23) opening on the perforating surface, the perforating spikes having a smooth tapered shape, without any sharp edges, the spikes having an average cone angle of less than 60°, **characterised by** the perforating surface (24) having an shape which is substantially curved and convex, as viewed from the exterior.

9. Device according to claim 8, **characterised in that** the perforating spikes have an average cone angle between 30° and 50°.

10. Device according to claim 8 or 9, **characterised in that** the perforating spikes have are substantially cone shape with substantially straight generator lines (29).

11. Device according to claim 8, 9 or 10, **characterised in that** the water supply channel opens substantially in the centre of the perforating surface.

12. Device according to any one of the claims 8 to 11, suitable for preparing a beverage or liquid foodstuff from a capsule comprising a substantially rigid shell formed by a side wall (8) and a bottom wall (11) forming a receptacle in which the product is stocked, the shell comprising an annular flange section (18) extending substantially in a radial plane R, the capsule comprising a flexible membrane (17) welded or bonded to the annular flange section (18), the membrane and the shell being made of one or more polymers, the flexible membrane (17) being made from a multiple layer sheet.

13. Device according to the preceding claim, **characterised in that** the shell and flexible membrane are made of polypropylene.

14. Device according to one of the two preceding claims, **characterised in that** the flexible membrane is made from a multiple layer sheet having at least five layers.

15. Device according to any one of claims 12 to 14, **characterised in that** the flexible membrane has a substantially planar shape before use of the capsule.

16. Device according to any one of claims 12 to 15, **characterised in that** the side wall (8) of the shell has a substantially conical shape, the diameter of the cone decreasing from the annular flange section towards the bottom wall.

## Patentansprüche

1. Verfahren zur Herstellung eines Getränks oder eines flüssigen Nahrungsmittels aus einer Kapsel, die ein Produkt mit einer zu extrahierenden Substanz enthält, wobei die Kapsel eine Schale (8, 11), die einen starren Behälter bildet, sowie eine weiche Membran (17) besitzt, die ein starkes elastisches oder dauerhaftes Verformungsvermögen besitzt und eine offene Seite der Schale abschliesst, mit den Schritten:
- Stechen einer Mehrzahl glatter, über die weiche Membran verteilter Löcher (26) mittels eines Injektionskopfes (3), der eine Perforationsfläche (24) mit von aussen gesehen konvexer Gestalt besitzt und mit einer Mehrzahl von Perforationsspitzen (25) versehen ist, die über die Perforationsfläche verteilt sind und eine sich ausweitende, glatte Gestalt ohne scharfe Kanten besitzen, wobei diese Perforationsfläche die weiche Membran an das Produkt im Inneren der Kapsel drückt oder eine Zugkraft in der Membran anlegt; und
- Wasserinjektion auf die weiche Membran, dergestalt, dass sie sich zum Produkt im Inneren der Kapsel hin verformt und dass das Wasser in die Kapsel durch die glatten Löcher eintritt, ohne dass diese reissen.

2. Verfahren nach Anspruch 1, **dadurch gekennzeichnet, dass** die Grösse der durch die Perforationsspitzen gestochenen Löcher unter anderem durch das Füllniveau oder die Dichte des Produkts im Inneren der Kapsel gesteuert wird, um so den hydraulischen Druckunterschied ΔP zwischen den beiden Seiten der weichen Membran zu beeinflussen und eine selbsttätige Regelung der Kompression des in der Kapsel enthaltenen Produkts zu erreichen.

3. Verfahren nach Anspruch 1 oder 2, **dadurch gekennzeichnet, dass** die Schale durch eine Seitenwand (8) und einen Boden (11) gebildet wird und einen ringförmigen Rand (18) umfasst, der sich im Wesentlichen in einer radialen Ebene R erstreckt und an den die weiche Membran der Kapsel angeschweisst oder angeklebt ist, wobei der Rand und der angeschweisste Teil der weichen Membran zwischen einer auf dem Injektionskopf sitzenden Ringdichtung (29) und dem oberen Rand des Kapselträgers eingespannt sind.

4. Verfahren nach einem der Ansprüche 1, 2 oder 3, **dadurch gekennzeichnet, dass** die Schale und die weiche Membran aus Polypropylen bestehen.

5. Verfahren nach einem der vorangehenden Ansprüche, **dadurch gekennzeichnet, dass** die weiche Membran aus einer Mehrschichtenfolie mit mindestens fünf Schichten gefertigt wird.

6. Verfahren nach einem der vorangehenden Ansprüche, **dadurch gekennzeichnet, dass** die weiche Membran vor Gebrauch der Kapsel eine im Wesentlichen ebene Gestalt besitzt.

7. Verfahren nach einem der vorangehenden Ansprüche, **dadurch gekennzeichnet, dass** die Seitenwand (8) der Schale der Kapsel eine im Wesentlichen kegelförmige Gestalt besitzt, wobei sich der Kegeldurchmesser vom ringförmigen Rand zum Boden hin verringert.

8. Gerät zur Herstellung eines Getränks oder eines flüssigen Nahrungsmittels aus einer Kapsel, die ein Produkt mit einer zu extrahierenden Substanz enthält, wobei das Gerät einen Injektionskopf (3) umfasst, der eine Perforationsfläche (24), die mit einer Mehrzahl von Perforationsspitzen (25) versehen ist, die über die Perforationsfläche verteilt sind, sowie zumindest einen Wasserzufuhrkanal (23) aufweist, der auf der Perforationsfläche mündet, wobei die Perforationsspitzen eine sich ausweitende, glatte Gestalt ohne scharfe Kanten besitzen und die Spitzen einen mittleren Kegelwinkel von weniger als 60° haben, **dadurch gekennzeichnet, dass** die Perforationsfläche (24) eine im Wesentlichen gekrümmte und von aussen her gesehen konvexe Gestalt besitzt.

9. Gerät nach Anspruch 8, **dadurch gekennzeichnet, dass** die Perforationsspitzen einen mittleren Kegelwinkel zwischen 30° und 50° besitzen.

10. Gerät nach Anspruch 8 oder 9, **dadurch gekennzeichnet, dass** die Perforationsspitzen im Wesentlichen die Gestalt eines Kegels mit im Wesentlichen geraden Mantellinien besitzen.

11. Gerät nach Anspruch 8, 9 oder 10, **dadurch gekennzeichnet, dass** der Wasserzufuhrkanal im Wesentlichen in der Mitte der Perforationsfläche mündet.

12. Gerät nach einem der Ansprüche 8 bis 11, für die Herstellung eines Getränks oder eines flüssigen Nahrungsmittels aus einer Kapsel mit einer im Wesentlichen starren Schale geeignet, die durch eine Seitenwand (8) und einen Boden (11) gebildet wird und einen Behälter bildet, in dem das Produkt lagert, wobei die Schale ausserdem einen ringförmigen Rand (18) umfasst, der sich im Wesentlichen in einer radialen Ebene R erstreckt, während die Kapsel ausserdem eine weiche Membran (17) umfasst, die an den ringförmigen Rand (18) angeschweisst oder angeklebt ist, wobei die Membran und die Schale aus einem oder mehreren Polymeren gefertigt werden und wobei die weiche Membran (17) aus einer Mehrschichtenfolie gefertigt wird.

13. Gerät nach dem vorangehenden Anspruch, **dadurch gekennzeichnet, dass** die Schale und die weiche Membran aus Polypropylen bestehen.

14. Gerät nach einem der beiden vorangehenden Ansprüche, **dadurch gekennzeichnet, dass** die weiche Membran aus einer Folie mit mindestens fünf Schichten gefertigt wird.

15. Gerät nach einem der Ansprüche 12 bis 14, **dadurch gekennzeichnet, dass** die weiche Membran vor Gebrauch der Kapsel eine im Wesentlichen ebene Gestalt besitzt.

16. Gerät nach einem der Ansprüche 12 bis 15, **dadurch gekennzeichnet, dass** die Seitenwand (8) der Kapselschale eine im Wesentlichen kegelförmige Gestalt besitzt, wobei sich der Kegeldurchmesser vom ringförmigen Rand zum Boden hin verringert.
